# EUROPEAN PATENT APPLICATION

(11) **EP 0 689 974 A1**
(43) Date of publication of application: **03.01.1996**
(21) Application number: 95109681.7
(22) Date of filing: 22.06.1995
(51) Int. Cl.: B60R 25/04, G07C 9/00, E05B 49/00

(54) **An additional safety system for a vehicle immobiliser**

(30) Priority: 01.07.1994 IT TO940546
(71) Applicant: MAGNETI MARELLI S.p.A., I-20145 Milano (IT)
(72) Inventor: Negro, Luciano, I-10046 Poirino (Torino) (IT); Salomone, Giuseppe, I-10042 Nichelino (Torino) (IT); Cotignoli, Giuseppe, I-10042 Collegno (Torino) (IT)
(74) Representative: Quinterno, Giuseppe

(57) **Abstract**

An additional safety system for an anti-theft system for motor vehicles in which the user, before being able to utilise the vehicle, must perform a recognition procedure in which he communicates the anti-theft system secret coded information known only to him for the purpose of preventing use of the vehicle itself by ill-intentioned people who may get possession of the key (K) and/or the anti-theft system remote control.

## Description

The present invention relates generally to systems activated by a coded control, and more specifically relates to systems of this type intended to control the ignition of a motor vehicle combustion engine.

Electronic anti-theft systems are becoming ever more widespread in current motor vehicles. Such systems can perform two functions, that is an alarm function in the event of intrusion by an unauthorised person into the vehicle and an immobilisation function operable to prevent an unauthorised person from being able to drive the vehicle in question.

This immobilisation function normally consists of preventing the operation of the combustion engine and is present in almost all current anti-theft systems. The immobilisation function can be achieved in various ways, for example by interrupting electrical circuits necessary for the operation of the combustion engine, such as the circuits which supply the starter motor and associated electromagnet, or by preventing the supply of fuel to the combustion engine, in this case, also, acting electrically on the fuel pump or a solenoid valve located in the fuel line.

Naturally it is fundamental that an anti-theft system, whether it performs the alarm function, the immobilisation function or both, should be able to recognise the person authorised to use the vehicle in such a way as to allow him to use it, and at the same time be as impervious as possible to attempts at tampering by possible ill-intentioned people.

For this purpose current anti-theft systems utilise a code for the purpose of recognising the person authorised to use the vehicle. Such code is carried by the vehicle legitimate user and is communicated to the anti-theft system for the purpose of rendering the vehicle operative. The code can be held in various forms, and likewise can be communicated to the anti-theft system utilising different methods.

Thus there are codes recorded on magnetic cards, codes represented by values of electrical resistors, and codes stored in electronic circuits of various types. Even the conventional key constitutes a kind of mechanical code. Code communication systems can for example include transmission by radio waves, infra red transmission, reading by magnetic sensors or communication by electrical conductors.

The most widely used systems at present are remote controls in which the code is transmitted by radio waves. A variant of this system provides for the use of a passive remote control called a "transponder". This remote control is passive in that it has no power supply and thus needs no electrical batteries which are required by a conventional remote control. The passive remote control or transponder is supplied when it is close to an inductive antenna forming part of the communication device of the anti theft system. Obviously the inductive antenna of the communication device of the anti-theft system must be able to operate in such a way that when it is approached by the transponder this is powered thereby and can therefore be recognised by the anti-theft system.

The transponder is also provided with an inductive antenna which receives the energy transmitted by the communication device of the anti-theft system. Communication of the code, once the transponder is supplied, takes place by means of the same inductive antenna used for supply. This system has the advantage of making the transponder a highly reliable device and eliminates the disadvantages caused by accidental discharge of the electrical supply batteries or accumulators. Increasing miniaturisation of such remote controls is likewise known to the extent that they have currently reached dimensions such that they can be used as key carriers or can be integrated into the vehicle key itself.

Such anti-theft systems are, however, entirely useless if an ill-intentioned person gets possession of the remote control. In this case, in fact, whoever has possession of the remote control, typically associated with the vehicle key, is able easily to utilise the vehicle. The possibility that an ill-intentioned person should get possession of the remote control and/or of the vehicle key is not entirely remote. The legitimate proprietor can in fact be robbed, have his bag snatched, or be constrained to give up the key under the threat of arms to cite only a few of the ways in which an ill-intentioned person may gain possession of the keys and associated remote control of the vehicle. There is also the possibility that the legitimate proprietor may mislay the keys or leave the vehicle even for a few seconds, leaving the key inserted in the dash board thus creating occasions which an ill-intentioned person can exploit to his advantage.

It is necessary here therefore to provide an additional system as well as the vehicle anti-theft system which should be able to prevent, or in any event to make extremely difficult, theft of the vehicle even if an ill-intentioned person has possession of the key and/or the remote control of the vehicle anti-theft system.

The object of the present invention is that of providing an anti-theft system having coded control activation which permits the above indicated disadvantage to be resolved in a satisfactory manner.

According to the present invention this object is achieved by an anti-theft system having coded control activation having the characteristics indicated in the claims which follow the present description.

Further advantages and characteristics of the present invention will become apparent from the following detailed description given with the aid of the attached drawings provided purely by way of non-limitative example, in which:

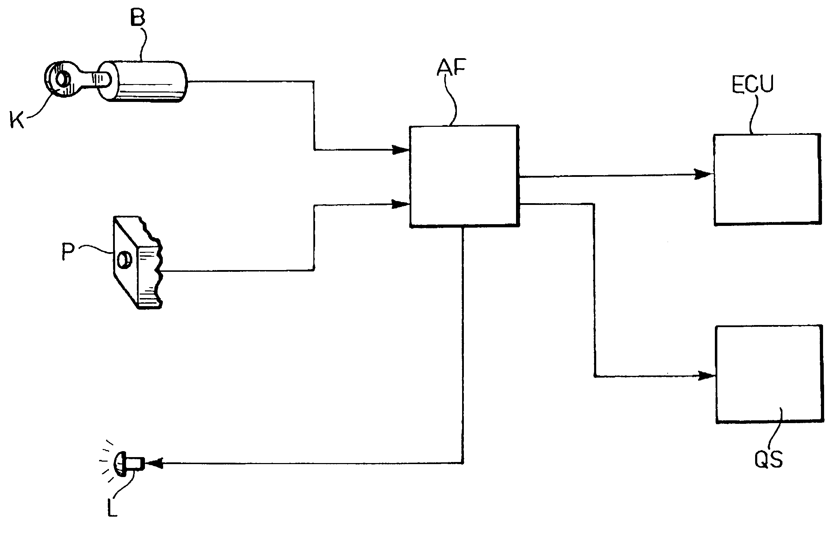

Figure 1 is a block schematic representation of an anti-theft system according to the present invention.

The present invention essentially consists in configuring an anti-theft system for vehicles in such a way that, upon ignition of the vehicle combustion engine it performs a recognition procedure able to check the legitimacy of the vehicle user.

With reference to Figure 1 there is shown an anti-theft system comprising a control device B for ignition of the combustion engine (for example the classic ignition lock). Associated with the control device B is shown a key K possibly carrying a code, and intended to activate the vehicle combustion engine via the control device B. The control device B is connected to one or more devices performing the functions of enabling and immobilisation of the vehicle combustion engine. These devices can for example be an electronic central control unit AF for controlling the anti-theft system, a central control unit ECU for the ignition or the fuel injection system of the combustion engine and/or the instrument panel QS of the vehicle.

Moreover, the anti-theft system according to the invention, in a presently preferred embodiment, is provided with a push button key P and an optical indicator lamp L, for example a lamp or an LED. The anti-theft system according to the invention is configured in such a way as to permit the starting of the combustion engine only after the performance of a recognition procedure which will now be described.

Normally, when it is desired to put the combustion engine of a typical motor vehicle into operation one introduces the ignition key into the ignition lock B associated with the motor vehicle dash board and then rotates this to reach a first predetermined angular position in which a series of electrical circuits of the vehicle are connected. Subsequently the key K is turned further to reach a temporary position for the purpose of starting the vehicle combustion engine.

In the system according to the invention this procedure differs substantially however. In fact, upon rotating the ignition key K into the starting position, immediately after having reached the position in which the vehicle electrical circuits are connected, the system prevents starting of the combustion engine. On the other hand, upon reaching the first position, that is to say the position in which the electrical circuits of the vehicle are connected, the anti-theft system enables the performance of a recognition procedure. This recognition procedure, for a currently preferred embodiment, will now be described hereinbelow.

Upon reaching the position of the ignition key K in which the electrical circuits are connected the optical indicator L starts to flash (that is to say emit pulses of light). The user observes the indicator lamp L counting the light pulses. When the indicator L has emitted a predetermined number of light pulses, and before it emits the next pulse, the user presses a push button P. In this way the legitimate user communicates to the anti-theft system according to the invention a number which represents coded information which the anti-theft system utilises to verify the legitimacy of the user.

After having received the said number in the manner described above the anti-theft system, after a pause, starts to flash the lamp L again in such a way that the user can communicate a second number in an entirely identical manner. In this way the anti-theft system receives from the legitimate user the code constituted by two numbers, typically two short numbers for example two digits, in such a way as to increase the intrinsic security of the recognition procedure. It is apparent that this coded information, constituted in the specific case by a pair of numbers, is not associated with the key or with the remote control, but simply memorised or remembered by the legitimate user. In the case, therefore, that the key and/or the remote control fall into the hands of an ill-intentioned person this person will nevertheless find himself not provided with this coded information.

The anti-theft system is naturally configured in such a way as to make the combustion engine impossible to start unless the user correctly carries through the recognition procedure by communicating the said coded information. If the recognition procedure is not performed in a correct manner, or is prematurely terminated, the anti-theft system not only prevents starting of the combustion engine, but, possibly after having allowed the possibility of a further attempt, in a currently preferred embodiment, completely disables the whole system for a predetermined period of time, for example five minutes. Only after this predetermined time period does the anti-theft system permit a new attempt at the recognition procedure and then a possible use of the vehicle. In this way, even if the coded information is very simple, or has a limited number of combinations, a possible ill-intentioned person wanting to utilise the vehicle protected by the anti-theft system according to the invention must wait for a period of time which can be of significant length.

It is evident that the previously described manner of communicating the said code to the anti-theft system is not the only one possible. For example the legitimate user, by means of the push button P, can communicate to the anti-theft system coded information according to a code substantially analogous to the morse code, that is to say constituted by a succession of short and long depressions of the push button P. Other systems or combinations of systems are also possible for communicating the coded information to the anti-theft system. For example the anti-theft system can be made to emit predetermined sequences of light pulses to the indicator L, known to the legitimate user, to which he must respond with sequences of depressions, or depressions of long or short duration, of the push button P.

For the purpose of making use of the vehicle even more difficult to any one who is not the legitimate user it is possible also to utilise another control device present on the vehicle in place of the push button P as the device for communicating with the anti-theft system. To this end, for example, one of the pedals of the vehicle or one of the numerous push buttons or controls already present in the vehicle can be utilised (lights, windscreen wipers etc.)

If the ignition key K is of the type comprising or associated with a remote control of the passive or transponder type as previously described, the push button P may possibly be provided on the key K or on the remote control associated with it.

Moreover, the additional anti-theft system according to the invention can provide further advantageous characteristics. For example, the proprietor of the vehicle can vary the coded information or can disable the additional system when desired. The push button P and/or the light indicator L can be connected to any of the devices performing the functions of enablement or immobilisation of the vehicle combustion engine. The indicator L can be of other than optical type, for example an acoustic indicator. Also the push button P can be constituted by a different device, for example an on-off or diverter switch, as long as it is able to allow communication with the electronic central control unit AF of the anti-theft system.

Naturally the principle of the invention remaining the same, the details of construction and the embodiments can be widely varied with respect to what has been described and illustrated, without by this departing from the ambit of the present invention.

## Claims

1. An additional safety system for a motor vehicle anti-theft system comprising:
- processor means (AF),
- actuator means (ECU, QS) operatively connected to the said processor means (AF) and able selectively to allow or prevent use of the said vehicle
- characterised in that it includes communication means (P, L) operable to allow an exchange of information with the user of the said vehicle,
- said processor means (AF) being configured so as to:
- perform a recognition procedure before use of the said vehicle by the user, comprising communication from the user to the said processor means (AF), of predetermined coded information known to the said user.
- verifying the correctness of the said coded information and consequently:
- preventing use of the said vehicle if the said coded information is erroneous,
- allowing use of the said vehicle if the said coded information is correct.

2. A system according to Claim 1, characterised in that the said communication means (P, L) include a control device (P) operable by the said user, and in that the said coded information consists of a predetermined sequence of activations of the said control device (P).

3. A system according to Claim 2, characterised in that the said predetermined sequence of activations of the said control device (P) comprises periods of separate activation distinguished by their duration in time.

4. A system according to Claim 2, characterised in that the said communication means (P, L) include an indicator device (L) controlled by the said processor means (AF), and in that the said predetermined sequence of activation is regulated by the activation of the said indicator device (L).

5. A system according to Claim 4, characterised in that the said indicator device (L) is activated cyclically with pulses of short duration, by the said processor means (AF) and the said user communicates the said coded information, comprising a predetermined number, by activating the said control device (P) after activation of the said indicator device (L) for a number of said short pulses equal to the said predetermined number.

6. A system according to Claim 5, characterised in that the communication of the said coded information by the said user comprises communication of at least two of the said predetermined numbers.

7. A system according to any of Claims 1 to 6, characterised in that the said control device is a push button (P).

8. A system according to any of Claims 1 to 6, characterised in that the said control device is a on/off switch (P).

9. A system according to any of Claims 1 to 6, characterised in that the said control device is a diverter switch (P).

10. A system according to any of Claims 7 to 9, characterised in that the said control device (P) is provided on a key (K) for activation of the said vehicle.

11. A system according to any of Claims 1 to 6, characterised in that the said control device is constituted by a control device (P) of the said motor vehicle.

12. A system according to any of Claims 1 to 11, characterised in that the said indicator device is an optical indicator (L).

13. A system according to any of Claims 1 to 11, characterised in that the said indicator device is an acoustic indicator.

14. A system according to Claim 12, characterised in that the said optical indicator is an indicator (L) of the said vehicle.

15. A system according to Claim 10, characterised in that the said key (K) is associated with a remote control operable to transmit further information.

16. A system according to Claim 15, characterised in that the said remote control (K) is a remote control which is supplied by inductive coupling to a radio wave emitter.

17. A system according to Claim 16, characterised in that it includes means operable to supply the said remote control (K) by means of inductive coupling.

18. A system according to any of Claims 1 to 17, characterised in that the said actuator means (ECU, QS) comprise means operable to perform functions chosen from the group constituted by:
- immobility enabling the motor vehicle combustion engine
- locking/unlocking the vehicle doors
- activation/disactivation of the vehicle electrical circuits,
- activation/disactivation of the vehicle instruments
- activation/disactivation of the acoustic and/or light indicator devices of the vehicle.

19. A system according to any of Claims 1 to 18, characterised in that it can be disactivated in a manner which allows use of the said vehicle by the said user.
